# EUROPÄISCHE PATENTSCHRIFT

(11) **EP 0 500 547 B1**
(45) Veröffentlichungstag und Bekanntmachung des Hinweises auf die Patenterteilung: **23.11.1994**
(21) Anmeldenummer: 90913816.6
(22) Anmeldetag: 21.09.1990
(51) Int. Cl.: G11B 7/09

(54) **FOKUSREGELKREIS**
AUTOMATIC FOCUSSING CONTROL
CIRCUIT DE REGULATION A CONCENTRATION

(30) Priorität: 28.10.1989 DE 3936032
(43) Veröffentlichungstag der Anmeldung: 02.09.1992
(73) Patentinhaber: Deutsche Thomson-Brandt GmbH, 78003 Villingen-Schwenningen (DE)
(72) Erfinder: ZUCKER, Friedhelm, D-7733 Mönchweiler (DE); BÜCHLER, Christian, D-7730 Marbach (DE); SCHRÖDER, Heinz-Jörg, D-7730 Marbach (DE)
(86) Internationale Anmeldenummer: EP9001603
(87) Internationale Veröffentlichungsnummer: WO9106949

(56) Entgegenhaltungen:
- GB-A- 2 150 385
- PATENT ABSTRACTS OF JAPAN, volume 12, No. 123 (P-690) 16 April 1988, & JP-A-62 248138 (SANSUI ELECTRIC CO.) 29 October 1987
- PATENT ABSTRACTS OF JAPAN, volume 11, No. 126 (P-569) 21 April 1987, & JP-A-61 269241 (SONY CORPORATION) 28 November 1986

## Beschreibung

Die Erfindung betrifft einen Fokusregelkreis für eine optische Abtastvorrichtung, wobei ein Lichtstrahl mittels eines Spurregelkreises entlang der um eine Mittenfrequenz gewobbelten Datenspuren eines plattenförmigen Aufzeichnungsträgers geführt wird und mittels des Fokusregelkreises auf den Aufzeichnungsträger fokussiert wird und wobei der Lichtstrahl vom Aufzeichnungsträger auf einen Vierquadrantenphotodetektor reflektiert wird.

Aus der DE-PS 3153674 ist ein plattenförmiger Aufzeichnungsträger bekannt, dessen Datenspuren um eine Mittenfrequenz gewobbelt sind. Die Datenspuren haben daher einen sinusförmigen Verlauf. Der Vorteil dieser besonderen Form der Datenspuren besteht darin, daß sie zusätzliche Informationen, z.B. Positionsinformationen, tragen können.

Beim sogenannten Push-Pull-Verfahren wird z.B. der die Daten eines derartigen Aufzeichnungsträgers abtastende Lichtstrahl mittels eines Fokusregelkreises auf den Aufzeichnungsträger fokussiert und mittels eines Spurregelkreises entlang der um eine vorgegebene Frequenz gewobbelten Datenspuren geführt. Der die Datenspuren abtastende Lichtstrahl wird vom Aufzeichnungsträger auf einen Vierquadrantenphotodetektor reflektiert, der aus vier Photodioden A, B, C und D aufgebaut ist. Die Ausgangssignale der vier Photodioden A, B, C und D werden in einem Additionsverstärker addiert. Um das Spurfehlersignal, das Regelsignal für den Spurregelkreis, zu erzeugen, werden die Ausgangssignale der einen beiden nebeneinander liegenden Photodioden A und B den Additionseingängen eines ersten Differenzverstärkers zugeführt, während die Ausgangssignale der anderen beiden nebeneinander liegenden Photodioden C und D den Subtraktionseingängen des ersten Differenzverstärkers zugeführt werden. Das Regelsignal für den Fokusregelkreis, das sogenannte Fokusfehlersignal, wird am Ausgang eines zweiten Differenzverstärkers abgegriffen, dessen Additionseingängen die Ausgangssignale der einen beiden diagonal gegenüberliegenden Photodioden A und C zugeführt werden, während die Ausgangssignale der anderen beiden diagonal gegenüberliegenden Photodioden B und D an den Subtraktionseingängen des zweiten Differenzverstärkers liegen.

Zur Kompensation unerwünschter Offsetspannungen, die im Photodetektor und in den Verstärkern auftreten, wird eine mittels eines Potentiometers einmal fest eingestellte Kompensationsspannung in den Fokusregelkreis eingespeist.

Dieses Verfahren hat aber den Nachteil, daß eine Drift der Offsetspannungen z.B. infolge Alterung der Bauteile oder infolge Temperaturschwankungen unberücksichtigt bleibt. Um auch die Drift der Offsetspannungen zu kompensieren, müßte die Kompensationsspannung mittels des Potentiometers daher ständig neu eingestellt werden.

Aus der GB-A-2 150 385 ist ein Fokusregelkreis bekannt, dessen Aufbau nun beschrieben wird.

Die Ausgangsspannungen der einen beiden sich diagonal gegenüberliegenden Photodioden eines Vierquadrantenphotodetektors werden in einem ersten Addierer addiert, während ein zweiter Addierer die Ausgangsspannungen der anderen beiden sich diagonal gegenüberliegenden Photodioden addiert. In einem ersten Differenzverstärker wird die Differenz der Summen des ersten und zweiten Addierers gebildet. In einem dritten Addierer wird die Summe der Ausgangsspannungen der einen beiden sich gegenüberliegenden Photodioden gebildet, während in einem vierten Addierer die Summe der Ausgangsspannungen der anderen beiden sich gegenüberliegenden Photodioden gebildet wird. In einem zweiten Differenzverstärker wird die Differenz aus den Summen des dritten und vierten Addierers gebildet. Ein fünfter Addierer bildet die Summe aus den Ausgangsspannungen der einen beiden übereinanderliegenden Photodioden während ein sechster Addierer die Summe aus den Ausgangsspannungen der anderen beiden übereinanderliegenden Photodioden bildet. In einem dritten Differenzverstärker wird die Differenz der Summen des fünften und sechsten Addierers gebildet. In einem Multiplizierer wird das Produkt der Differenz am Ausgang des zweiten und am Ausgang des dritten Differenzverstärkers gebildet und dem einen Eingang eines vierten Differenzverstärkers zugeführt, dessen anderem Eingang die Differenz am Ausgang des ersten Differenzverstärkers zugeführt wird. Am Ausgang des vierten Differenzverstärkers ist das Fokusfehlersignal abnehmbar.

Es ist deshalb Aufgabe der Erfindung, in einem Fokusregelkreis der eingangs genannten Art Offsetspannungen und ihre Drift z.B. infolge Alterung der Bauteile oder infolge von Temperaturschwankungen automatisch zu kompensieren.

Die Erfindung löst diese Aufgabe dadurch, daß das Spurfehlersignal dem ersten und das Fokusfehlersignal dem zweiten Eingang eines Multiplizierers zugeführt werden und daß das Ausgangssignal des Multiplizierers über einen Tiefpaß als Kompensationsspannung in den Fokusregelkreis eingespeist wird.

Es zeigen
Figur 1 ein erstes Ausführungsbeispiel der Erfindung
Figur 2 ein Ausführungsbeispiel eines Multiplizierers.

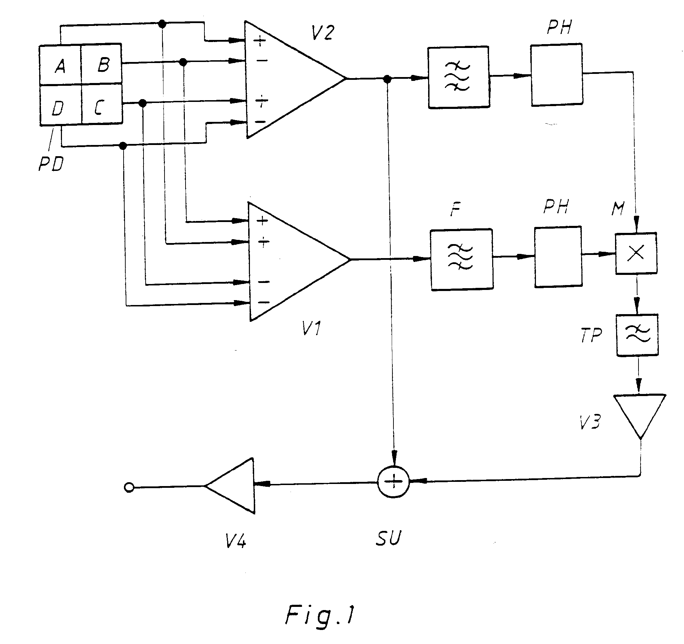

Anhand des in Figur 1 gezeigten Ausführungsbeispieles wird die Erfindung beschrieben und erläutert.

In der Figur 1 ist ein Vierquadrantenphotodetektor PD mit vier Photodioden A, B, C und D gezeigt. Die Ausgangssignale der einen beiden nebeneinander liegenden Photodioden A und B werden den Additionseingängen eines Differenzverstärkers V1 zugeführt, während die Ausgangssignale der anderen beiden nebeneinander liegenden Photodioden C und D an den Subtraktionseingängen des Differenzverstärkers V1 liegen. Die Ausgangssignale der einen beiden diagonal gegenüberliegenden Photodioden A und C werden den Additionseingängen eines Differenzverstärkers V2 zugeführt, während die anderen beiden diagonal gegenüberliegenden Photodioden B und D an den Subtraktionseingängen des Differenzverstärkers V2 liegen. Die Ausgänge der beiden Differenzverstärker V1 und V2 sind über je ein Filter F und einen Phasenschieber PH mit den beiden Eingängen eines Multipliziers M verbunden, dessen Ausgang über einen Tiefpaß TP und einen Verstärker V3 mit dem einen Eingang einer Summationsstelle SU verbunden ist. An den anderen Eingang der Summationsstelle SU ist der Ausgang des Differenzverstärkers V2 angeschlossen. Der Ausgang der Summationsstelle SU, an dem das kompensierte Fokusfehlersignal anliegt, ist mit dem Regelverstärker V4 des Fokusregelkreises verbunden.

Die Erfindung geht von der Erkenntnis aus, daß im Spurfehlersignal am Ausgang des Differenzverstärkers V1 die Frequenz enthalten ist, mit der die Datenspur des Aufzeichnungstragers gewobbelt ist.

Die Filter F, deren Durchlaßbereich der Wobbelfrequenz der Datenspuren des Aufzeichnungsträgers entspricht, und die Phasenschieber PH sind zur Funktion der Erfindung nicht unbedingt erforderlich, jedoch verbessern sie die Kompensation der Offsetspannungen.

Das Signal am Ausgang des Verstärkers V3 wird als Offsetkompensationsspannung in den Fokusregelkreis eingespeist. Es werden daher alle Offsetspannungen und deren Drift kompensiert, die z.B. infolge Alterung der Bauteile oder infolge von Temperaturschwankungen im Photodetektor PD und in den Verstärkern V1 und V2 verursacht wird.

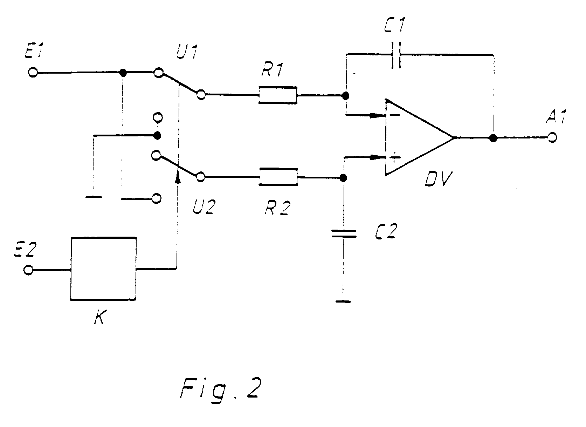

In der Figur 2 ist ein Auführungsbeispiel eines Multiplizierers M abgebildet.

Den einen Eingang E1 des Multiplizierers M, an dem das Ausgangssignal des Differenzverstärkers V2 anliegt, bilden die miteinander verbundenen ersten Eingänge zweier gemeinsam steuerbarer Umschalter U1 und U2, deren zweiten Eingänge auf Bezugspotential liegen. Den zweiten Eingang E2 des Multiplizierers M, dem das Spurfehlersignal am Ausgang des Differenzverstärkers V1 zugeführt wird, bildet der Eingang eines Vergleichers K oder Begrenzers, dessen Ausgang mit den Steuereingängen der beiden Umschalter U1 und U2 verbunden ist. Der Ausgang des einen Umschalters U1 ist über einen Widerstand R1 mit dem invertierenden Eingang eines Differenzverstärkers DV verbunden. Der Ausgang des anderen Umschalters U2 ist über einen Widerstand R2 mit den nichtinvertierenden Eingang des Differenzverstärkers DV verbunden, der über eine Kapazität C2 auf Bezugspotential liegt. Der Ausgang des Differenzverstärkers DV, der den Ausgang A1 des Multiplizierers M bildet, ist über eine Kapazität C1 auf den invertierenden Eingang zurückgekoppelt.

Der Vergleicher K wandelt das infolge der gewobbelten Datenspur sinusförmige Signal am Ausgang des Differenzverstärkers V1 in ein rechteckförmiges Signal um. Die beiden steuerbaren Umschalter U1 und U2 werden deshalb vom Vergleicher K mit der Frequenz des sinusförmigen Signals am Ausgang des Differenzverstärkers V1 umgeschaltet. Der Differenzverstärker DV integriert das Signal am Ausgang des Additionsverstarkers V2 in Abhängigkeit von der Stellung der beiden Umschalter U1 und U2 entweder in der einen oder in der anderen Richtung.

Die Erfindung ist für den Fokusregelkreis einer optischen Abtastvorrichtung geeignet, die einen optischen Aufzeichnungsträger abtastet, dessen Datenspuren um eine Frequenz gewobbelt sind.

## Patentansprüche

1. Fokusregelkreis für eine optische Abtastvorrichtung, wobei ein Lichtstrahl mittels eines Spurregelkreises entlang der um eine Mittenfrequenz gewobbelten Datenspuren eines plattenförmigen Aufzeichnungsträgers geführt wird und mittels des Fokusregelkreises auf den Aufzeichnungsträger fokussiert wird und wobei der Lichtstrahl vom Aufzeichnungsträger auf einen Vierquadrantenphotodetektor (PD) reflektiert wird, **dadurch** **gekennzeichnet**, daß das Spurfehlersignal dem ersten und das Fokusfehlersignal dem zweiten Eingang eines Multiplizierers (M) zugeführt werden und daß das Ausgangssignal des Multiplizierers (M) über einen Tiefpaß (TP) als Kompensationsspannung in den Fokusregelkreis eingespeist wird.

2. Fokusregelkreis nach Anspruch 1, **dadurch** **ge****kennzeichnet**, daß die Ausgangssignale der einen beiden nebeneinander liegenden Photodioden (A, B) des Photodetektors (PD) den Additionseingängen und die Ausgangssignale der anderen beiden nebeneinander liegenden Photodioden (C, D) den Subtraktionseingängen eines ersten Differenzverstärkers (V1) zugeführt werden, an dessen Ausgang das Spurfehlersignal abnehmbar ist, daß die Ausgangssignale der einen beiden diagonal gegenüberliegenden Photodioden (A, C) den Additionseingängen und die Ausgangssignale der anderen beiden diagonal gegenüberliegenden Photodioden (B, D) den Subtraktionseingängen eines zweiten Differenzverstärkers (V2) zugeführt werden, an dessen Ausgang das Fokusfehlersignal abnehmbar ist, daß der Ausgang des ersten Differenzverstärkers (V1) mit dem ersten Eingang des Multiplizierters (M) und der Ausgang des zweiten Differenzverstärkers (V2) mit dem zweiten Eingang des Multiplizierers (M) und dem ersten Eingang einer Summationstelle (SU) verbunden ist und daß der Ausgang des Tiefpasses (TP) mit dem zweiten Eingang der Summationsstelle (SU) verbunden ist, an deren Ausgang das Regelsignal für den Fokusregelkreis abnehmbar ist.

3. Fokusregelkreis nach Anspruch 1 oder 2, **dadurch gekennzeichnet**, daß sowohl zwischen dem ersten Differenzverstärker (V1) und dem Multiplizierer (M) als auch zwischen dem zweiten Differenzverstärker (V2) und dem Multiplizierer (M) ein Filter (F) liegt.

4. Fokusregelkreis nach Anspruch 1, 2 oder 3, **dadurch gekennzeichnet**, daß in mindestens einem Zweig, der von einem Verstärker (V1, V2) zum Multiplizierer (M) führt, ein Phasenschieber (PH) vorgesehen ist.

5. Fokusregelkreis nach Anspruch 1, 2, 3 oder 4, **da****durch gekennzeichnet**, daß die miteinander verbundenen ersten Eingänge eines ersten und zweiten steuerbaren Umschalters (U1, U2) den ersten Eingang (E1) des Multiplizierers (M) bilden, dem das Ausgangssignal des zweiten Differenzverstärkers (V2) zugeführt wird, daß die zweiten Eingänge der beiden steuerbaren Umschalter (U1, U2) auf Bezugspotential liegen, daß der Eingang eines Vergleichers oder Begrenzers (K), dessen Ausgang mit den Steuereingängen der beiden Umschalter (U1, U2) verbunden ist, den zweiten Eingang (E2) des Multiplizierers (M) bildet, daß der Ausgang des ersten Umschalters (U1) über einen ersten Widerstand (R1) mit dem invertierenden Eingang eines dritten Differenzverstärkers (DV) verbunden ist, daß der Ausgang des zweiten Umschalters (U2) über einen zweiten Widerstand (R2) mit dem nichtinvertierenden Eingang des dritten Differenzverstärkers (DV) verbunden ist, der über eine erste Kapazität (C2) auf Bezugspotential liegt, und daß der Ausgang des dritten Differenzverstärkers (DV), der den Ausgang (A1) des Multiplizierers (M) bildet, über eine zweite Kapazität (C1) auf den invertierenden Eingang zurückgekoppelt ist.

## Claims

1. A focus control circuit for an optical scanning device, in which a light beam is guided by means of a tracking control circuit along the data tracks of a disc-shaped recording medium, which are wobbled about a centre frequency, and is focussed by means of a focus control circuit onto the recording medium, and in which the light beam is reflected from the information medium onto a four-quadrant photodetector (PD), characterised in that the tracking error signal is fed to the first and the focus error signal to the second input of a multiplier (M) and in that the output signal of the multiplier (M) is fed via a low-pass filter (TP) as compensating voltage into the focus control circuit.

2. A focus control circuit according to claim 1, characterised in that the output signals of the first pair of adjacent photodiodes (A,B) of the photodetector (PD) are fed to the adding inputs and the output signals of the other pair of adjacent photodiodes (C,D) are fed to the subtracting inputs of a first differential amplifier (V1), at the output of which the tracking error signal can be derived, in that the output signals of the first pair of diagonally positioned photodiodes (A,C) are fed to the adding inputs and the output signals of the other pair of diagonally positioned photodiodes (B,D) are fed to the subtracting inputs of a second differential amplifier (V2), at the output of which the focus error signal can be derived, in that the output of the first differential amplifier (V1) is connected to the first input of the multiplier (M) and the output of the second differential amplifier (V2) is connected to the second input of the multiplier (M) and to the first input of a summing point (SU) and in that the output of the low-pass filter (TP) is connected to the second input of the summing point (SU), at the output of which the control signal for the focus control circuit can be derived.

3. A focus control circuit according to claim 1 or 2, characterised in that both between the first differential amplifier (V1) and the multiplier (M) and also between the second differential amplifier (V2) and the multiplier (M) there is located a filter (F).

4. A focus control circuit according to claim 1,2 or 3, characterised in that in at least one branch leading from an amplifier (V1,V2) to the multiplier (M), there is provided a phase shifter (PH).

5. A focus circuit according to claim 1,2,3 or 4, characterised in that the interconnected first inputs of a first and a second controllable change-over switch (U1,U2) form the first input (E1) of the multiplier (M), which is supplied with the output signal of the second differential amplifier (V2), in that the second inputs of the two controllable change-over switches (U1,U2) are at reference potential, in that the input of a comparator or limiter (K), the output of which is connected to the control inputs of the two change-over switches (U1,U2), forms the second input (E2) of the multiplier (M), in that the output of the first change-over switch (U1) is connected via a first resistor (R1) to the inverting input of a third differential amplifier (DV), in that the output of the second change-over switch (U2) is connected via a second resistor (R2) to the non-inverting input of the third differential amplifier (DV), which is connected to reference potential via a first capacitor (C2), and in that the output of the third differential amplifier (DV), which forms the output (A1) of the multiplier (M), is fed-back via a second capacitor (C1) to the inverting input.

## Revendications

1. Circuit-régulateur de focalisation pour un dispositif de balayage optique, un faisceau lumineux étant guidé au moyen du circuit de régulation de pistes le long de pistes de données wobbulées autour d'une fréquence centrale d'un support d'enregistrement en forme de disque, focalisé sur le support d'enregistrement au moyen d'un circuit-régulateur de focalisation et le faisceau lumineux étant réfléchi par le support d'enregistrement sur un photodétecteur (PD) à quatre quadrants
**caractérisé** **en** **ce** **que** le signal d'erreur de piste est acheminé vers la première entrée et le signal d'erreur de focalisation vers la seconde entrée d'un multiplicateur (M) et que le signal de sortie du multiplicateur (M)est injecté en tant que tension de compensation dans le circuit-régulateur de focalisation par le biais d'un filtre passe-bas (PB).

2. Circuit-régulateur de focalisation selon revendication 1 **caractérisé** **en** **ce** **que** les signaux de sortie de l'une des deux paires de photodiodes (A, B) adjacentes du photodétecteur (PD) sont dirigés vers les entrées d'addition, et les signaux de sortie des deux autres photodiodes (C,D) adjacentes vers les entrées de soustraction d'un premier amplificateur différentiel (A1), à la sortie duquel, on peut prélever le signal d'erreur de piste, que les signaux de sortie de l'une des paires de photodiodes diagonalement opposées (A, C) sont acheminés vers les entrées d'addition et les signaux de sortie des deux autres photodiodes (B, D) diagonalement opposées vers les entrées de soustraction d'un deuxième amplificateur différentiel A2, à la sortie duquel on peut prélever le signal d'erreur de focalisation, que la sortie du pemier amplificateur différentiel (A1) est reliée à la première entrée du multiplicateur (M) et que la sortie du deuxième amplificateur différentiel (A2) est reliée à la deuxième entrée du multiplicateur (M) et la première entrée d'un additionneur (Ad), et que la sortie du filtre passe-bas (PB) est reliée à la deuxième sortie de l'additionneur (Ad) à la sortie duquel on peut prélever le signal de régulation du circuit-régulateur de focalisation.

3. Circuit-régulateur de focalisation selon l'une des revendications 1 ou 2, **caractérisée** **en** **ce** **que** un filtre (F) se trouve tant entre le premier amplificateur différentiel (A1) et le multiplicateur (M) qu'entre le second amplificateur différentiel (A2) et le multiplicateur (M).

4. Circuit-régulateur de focalisation selon revendications 1, 2, ou 3, **caractérisé en** **ce** **que** dans au moins l'une des branches menant de l'un des amplificateurs (A1, A2) au multiplicateur (M), un décaleur de phases (PH) est prévu.

5. Circuit-régulateur de focalisation selon revendications 1, 2, 3 ou 4, **caractérisé en** **ce** **que**
les premières entrées d'un premier et d'un second commutateur pilotable (U1, U2) forment la première entrée (E1) du multiplicateur (M) vers lequel est acheminé le signal de sortie du deuxième amplificateur différentiel (A2), que les deuxièmes entrées des deux commutateurs pilotables (U1, U2) sont appliquées au potentiel de référence, que l'entrée d'un comparateur ou d'un limitateur (K) dont la sortie est reliée aux entrées de pilotage des deux commutateurs (U1, U2) forme la deuxième entrée (E2) du multiplicateur (M), que la sortie du premier commutateur (U1) est reliée par le biais d'une première résistance (R1) avec l'entrée inverseur d'un amplificateur différentiel (AD), que la sortie du second commutateur (U2) est reliée au moyen d'une deuxième résistance (R2) à l'entrée non-inverseur de l'amplificateur différentiel (AD) appliqué au potentiel de référence par le biais d'un premier condensateur (C2) et que la sortie du troisième amplificateur différentiel (AD) formant la sortie (S1) du multiplicateur (M) est réappliquée à l'entrée inverseur par le biais d'un second condensateur (C1).
